# EUROPEAN PATENT APPLICATION

(11) **EP 4 851 928 A1**
(43) Date of publication of application: **09.12.2026**
(21) Application number: 25747610.1
(22) Date of filing: 20.01.2025
(51) Int. Cl.: G06T 11/00

(54) **IMAGE GENERATION METHOD AND RELATED DEVICE**

(30) Priority: 30.01.2024 CN 202410131077
(71) Applicant: Beijing Zitiao Network Technology Co., Ltd., Beijing 100190 (CN)
(72) Inventor: MENG, Quan, Beijing 100028 (CN); PAN, Ruidong, Beijing 100028 (CN); WANG, Yuzhou, Beijing 100028 (CN); KANG, Hongwei, Beijing 100028 (CN); YANG, Xin, Beijing 100028 (CN); CHEN, Qi, Beijing 100028 (CN)
(74) Representative: Marks & Clerk LLP
(86) International application number: PCT/CN2025/073456
(87) International publication number: WO 2025/162038

(57) **Abstract**

The disclosure provides a method for image generation, including: extracting prompt information from an obtained base image; inputting the prompt information into a trained diffusion model, and obtaining an image to be predicted through a diffusion process; obtaining a description feature of the image to be predicted, and predicting a resource allocation effect of the image to be predicted based on the description feature; and determining a target image based on the resource allocation effect of the image to be predicted. Based on the above method for image generation, the disclosure further provides an apparatus, an electronic device, a storage medium, and a program product for image generation.

## Description

The present application claims priority to Chinese Patent Application No. 2024101310776, filed on January 30, 2024, and entitled "METHOD AND RELATED DEVICE FOR IMAGE GENERATION", which is incorporated herein by reference in its entirety.

### FIELD

The present disclosure relates to the field of image generation technology, and in particular, to a method and a related device for image generation.

### BACKGROUND

In an image production process of the prior art, images with better effects after resource allocation need to be selected, and new images are recreated based on these images.

Traditionally, this recreation process usually relies on manual design and creativity, and team members need to invest a lot of time in conceiving and producing similar high-quality images. In addition, obtaining images recreated by other members from other channels is also a new idea, but sometimes this may face the problem of unstable content quality.

### SUMMARY

In view of this, the present disclosure aims to provide a method, and a related device for image generation.

The present disclosure provides a method for image generation, including: extracting prompt information from an obtained base image; inputting the prompt information into a trained diffusion model, and obtaining an image to be predicted through a diffusion process; obtaining a description feature of the image to be predicted, and predicting a resource allocation effect of the image to be predicted based on the description feature; and determining a target image based on the resource allocation effect of the image to be predicted.

Based on the above method for image generation, an embodiment of the present disclosure provides an apparatus for image generation, including: an extraction module configured to extract prompt information from an obtained base image; a diffusion module configured to input the prompt information into a trained diffusion model, and obtain an image to be predicted through a diffusion process; a prediction module configured to obtain a description feature of the image to be predicted, and predict a resource allocation effect of the image to be predicted based on the description feature; and a determination module configured to determine a target image based on the resource allocation effect of the image to be predicted.

In addition, an embodiment of the present disclosure further provides an electronic device, including a memory, a processor, and a computer program stored on the memory and executable on the processor, where the processor implements the above method when executing the program.

An embodiment of the present disclosure further provides a non-transitory computer-readable storage medium. The non-transitory computer-readable storage medium stores computer instructions that are configured to cause a computer to execute the above method.

An embodiment of the present disclosure further provides a computer program product, including computer program instructions, where the computer program instructions, when running on a computer, cause the computer to execute the above method.

The above method and related device for image generation include: extracting prompt information from the obtained base image; inputting the prompt information into the trained diffusion model, and obtaining the image to be predicted through the diffusion process; obtaining the description feature of the image to be predicted, and predicting the resource allocation effect of the image to be predicted based on the description feature; and determining the target image based on the resource allocation effect of the image to be predicted. In the embodiments of the present disclosure, the prompt information is extracted from the base image, and historical high-quality images are interpreted comprehensively. Then, the prompt information is extracted from the interpreted information, and similar images (images to be predicted) of the base image are generated based on the prompt information. In addition, since a large number of similar images can be generated at one time based on the above method, in the present disclosure, the final qualified target image can be determined by predicting the resource allocation effect of the similar images.

### BRIEF DESCRIPTION OF THE DRAWINGS

In order to more clearly illustrate the technical solutions in the present disclosure or the related art, the following will briefly introduce the drawings that need to be used in the description of the embodiments or the related art. Obviously, the drawings in the following description are only embodiments of the present disclosure. For those of ordinary skill in the art, other drawings can be obtained based on these drawings without creative efforts.
FIG. 1 illustrates an implementation process of a method for image generation according to some embodiments of the present disclosure;
FIG. 2 illustrates a schematic diagram of an image according to some embodiments of the present disclosure;
FIG. 3 illustrates a schematic diagram of an apparatus for image generation according to some embodiments of the present disclosure; and
FIG. 4 illustrates a schematic diagram of a hardware structure of an electronic device according to an embodiment of the present disclosure.

### DETAILED DESCRIPTION

In order to make the purpose, technical solutions and advantages of the present disclosure clearer, the present disclosure will be further described in detail below in combination with specific embodiments and with reference to the drawings.

It should be noted that unless otherwise defined, the technical or scientific terms used in the embodiments of the present disclosure should have the ordinary meanings as understood by those with ordinary skills in the field to which the present disclosure belongs. "First", "second" and similar words used in the embodiments of the present disclosure do not represent any order, quantity or importance, but are only used to distinguish different components. "Include" or "comprise" or similar words mean that the elements or objects appearing before the term cover the elements or objects listed after the term and their equivalents, without excluding other elements or objects. "Connect" or "connected" or similar words are not limited to physical or mechanical connection, but may include electrical connection, whether direct or indirect. "Up", "down", "left", "right", etc. are only used to represent relative positional relationships, and when the absolute position of the described object changes, the relative positional relationships may also change accordingly.

It may be understood that before using the technical solutions in the embodiments of the present disclosure, the user will be informed of the type, range of use, use scenarios, etc. of the involved personal information in an appropriate manner, and the authorization of the user will be obtained.

For example, in response to receiving an active request from a user, prompt information is sent to the user to clearly inform the user that the requested operation will require access to and use of personal information of the user. In this way, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It may be understood that the above process of notifying and obtaining user authorization is only illustrative, and does not constitute a limitation on the implementations of the present disclosure. Other manners that satisfy relevant laws and regulations may also be applied to the implementations of the present disclosure.

As mentioned above, in the image production process of the prior art, images with better effects after resource allocation need to be selected, and new images are recreated based on these images. Traditionally, this recreation process usually relies on manual design and creativity, and team members need to invest a lot of time in conceiving and producing similar high-quality images. In addition, obtaining images recreated by other members from other channels is also a new idea, but sometimes this may face the problem of unstable content quality.

To this end, some embodiments of the present disclosure provide a method for image generation, including: extracting prompt information from an obtained base image; inputting the prompt information into a trained diffusion model, and obtaining an image to be predicted through a diffusion process; obtaining a description feature of the image to be predicted, and predicting a resource allocation effect of the image to be predicted based on the description feature; and determining a target image based on the resource allocation effect of the image to be predicted. In the embodiments of the present disclosure, the prompt information is extracted from the base image, and historical high-quality images are interpreted comprehensively. Then, the prompt information is extracted from the interpreted information, and similar images (images to be predicted) of the base image are generated based on the prompt information. In addition, since a large number of similar images can be generated at one time based on the above method, in the present disclosure, the final qualified target image can be determined by predicting the resource allocation effect of the similar images. With the method for image generation in embodiments of the present disclosure, a large number of similar images can be quickly generated while effectively saving human resources. Moreover, the generated similar images can be selected by predicting the resource allocation effect in advance, so as to obtain the final similar images, thereby optimizing the effect of actual resource allocation of the similar images.

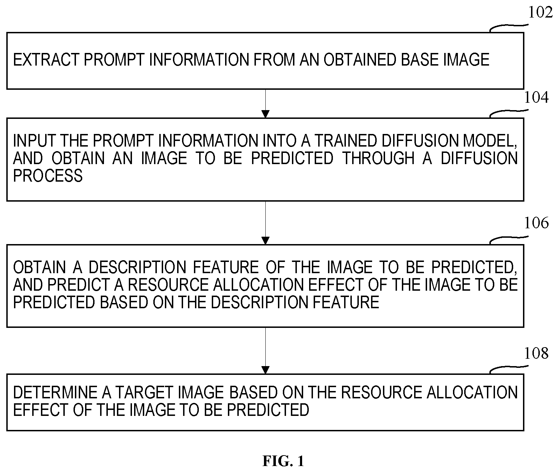

FIG. 1 illustrates an implementation process of a method for image generation according to some embodiments of the present disclosure. As shown in FIG. 1, the method may include the following steps.

At step 102, prompt information is extracted from an obtained base image. In the embodiments of the present disclosure, the base image is generally an image with a good resource allocation effect. Thus, those skilled in the art have a need to recreate these images to obtain more images with good resource allocation effects.

Step 102 may be understood as an in-depth analysis of the base image, i.e., an understanding and insight into the base image. This is because, in order to derive similar high-quality images from the base image, the embodiments of the present disclosure need to deeply understand the original content, accurately grasp key elements that can ensure the resource allocation effect, and ensure that these specific elements can be retained in the newly generated images.

In the embodiments of the present disclosure, evaluation of the performance of an image mainly involves the following aspects.

The first is the basic characteristics of the image. The basic characteristics of the image may generally include the resolution of the image, the size of the image, the clarity of the image, the color tone of the image, and contrast between the subject and background of the image.

The basic characteristics of the image may lay the overall tone of the image. Therefore, this aspect needs to be considered when evaluating the performance of the image. It may also be said that the basic characteristics of the image need to be determined first, or the basic characteristics of the image may be referred to as a constraint. In this way, it can be ensured that the subsequently generated images have basic similarity with the base image.

The second is the main content of the image. The main content of the image may involve the core element in the image, i.e., what the main subject is, what activity the main subject is engaged in, and the state of the main body as represented in the image.

The third is text information. The text information in the image is generally prominent and usually encompasses the core information of the image. Therefore, the text information in the image usually plays a critical role in guiding the resource allocation effect.

The last is the layout design of the image. The layout design of the image refers to positions of various elements in the image and their corresponding matching relationships. The layout design of the image needs to be considered in image evaluation, because a good layout design may significantly increase the overall expressiveness and attractiveness of the image, and effectively improve the effect of resource allocation.

In some embodiments of the present disclosure, extracting prompt information from the obtained base image may include extracting base information from the obtained base image; obtaining content information by recognizing image content of the base image; and obtaining the prompt information by performing information extraction on the base information and the content information.

In some embodiments of the present disclosure, the base information may include at least one of an image size, a resolution, a hue, or a contrast of the base image.

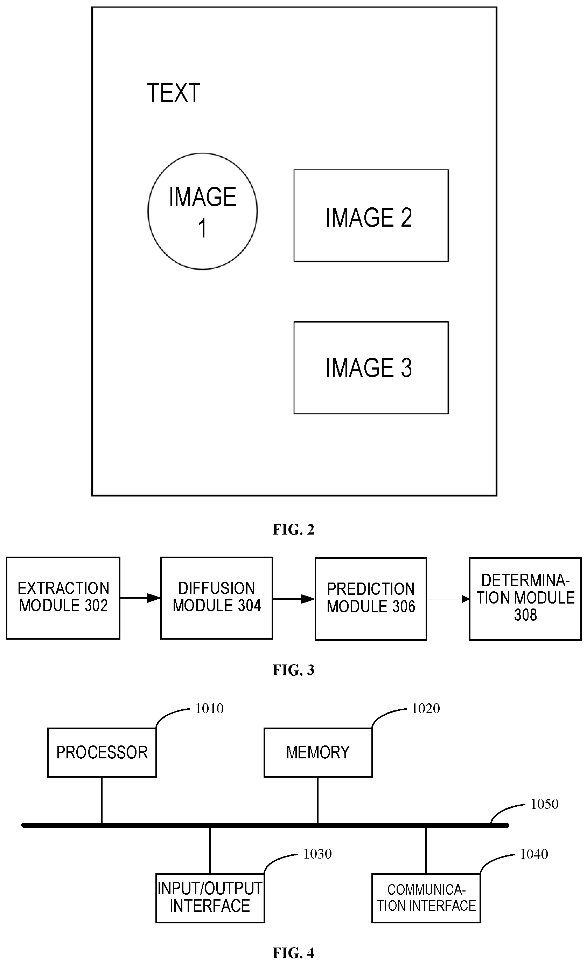

FIG. 2 illustrates a schematic diagram of an image according to some embodiments of the present disclosure. Reference may be made to FIG. 2, for example, image 1 is a circle, image 2 and image 3 are rectangles, and image 2 and image 3 have the same size, etc.

In the embodiments of the present disclosure, the base information is the above basic characteristics of the image. The basic characteristics may be obtained directly, or the corresponding information may be obtained by simple computer vision methods. Computer vision is a science that studies how to enable machines to "see". More specifically, it involves using cameras and computers to replace human eyes to perform machine vision tasks such as recognizing, tracking, and measuring targets, and further performing image processing to make images processed by computer more suitable for human observation or transmission to instruments for detection.

In some embodiments of the present disclosure, obtaining content information by recognizing image content of the base image may include: obtaining text information by recognizing text content of the base image; obtaining text position information by acquiring position information of the text information; obtaining image information by recognizing image content of the base image; obtaining layout information by recognizing image layout of the base image; and obtaining the content information based on the text information, the text position information, the image information, and the layout information.

As shown in FIG. 2, in the embodiment of the present disclosure, recognizing the image content of the base image may include: recognizing text content of the text, recognizing a position of the text, recognizing content of the image, and recognizing the layout of the image.

The text content of the base image may be recognized first using neural network technology. Specifically, this may include detecting where the text is located. In the embodiment of the present disclosure, the text may be detected through object detection.

The task of object detection is to find all targets (objects) of interest in the image. Different from classification and regression tasks, object detection needs to determine the position (localization) of the object in the image, and determine the category and position (classification and localization) of the recognized object.

For example, after the text is recognized in FIG. 2, the result that the text is located in the upper left corner of the image may be obtained.

Further, after the position of the text is recognized, the detected text position area may be recognized to obtain the specific content of the text.

In the embodiment of the present disclosure, the specific content of the text may be recognized by optical character recognition (OCR) technology. Optical character recognition refers to a process of analyzing and recognizing an image file of a text material to obtain text and layout information. That is, the text in the image is recognized and returned in the textual format.

In the embodiment of the present disclosure, the image content of the base image may be recognized to obtain the image information. The image information here may be very specific. For example, it may be recognized that the image currently includes perfume of brand A and its specific number, and also includes skin lotion of brand A and its specific number, etc.

Subsequently, the image layout of the base image may be recognized. The image layout here may include: a multi-image splicing material, a single-image material, text displayed on the top, text displayed in the middle, etc. Alternatively, reference may be made to FIG. 2. For example, the image is a multi-image splicing material with no overlap between individual images. Image 1 is circular, located on the left side of the overall image and to the left side of image 2. Image 2 and image 3 are aligned vertically, image 3 is located below image 2, and both image 2 and image 3 are located on the right side of the image.

Subsequently, the content information may be obtained based on the text information, the text position information, the image information, and the layout information. In the embodiment of the present disclosure, after the text information, the text position information, the image information, and the layout information are obtained, the aforementioned information may be synthesized to obtain the content information (i.e., information that provides a detailed description of the image's content, layout, etc.) of the image.

In the embodiment of the present disclosure, the detailed description information corresponding to the image (for example, a man is standing on a surfboard and surfing on the sea) may also be directly produced by multi-modal technology. It can directly and in detail describe the subject information of the image.

In some embodiments of the present disclosure, obtaining the prompt information by performing information extraction on the base information and the content information may include obtaining the base information, the text position information, and the layout information; extracting core information of the text information and the image information; and obtaining the prompt information based on the base information, the text information, the layout information, and the core information.

In the embodiment of the present disclosure, after the text information, the text position information, the image information, and the layout information are obtained, the detailed information corresponding to the image may be obtained comprehensively. Subsequently, when recreating the image, it may be recreated based on the prompt information. However, after the detailed information is obtained, the detailed information may not be directly used as the prompt information. This is because, for the embodiments of the present disclosure, similar images need to be created, and only the most core content of the base image needs to be retained. Preserving excessive details would instead hinder the subsequent recreation of the image.

Therefore, it is necessary to extract content from the obtained detailed information to obtain the corresponding prompt information. The specific steps may include retaining the obtained base information, text position information, and layout information. For example, the base information may include that image 1 is circular, image 2 is square, image 3 is square, the image background is warm-toned, and there is a contrast with the cosmetic image.

For the text information and the image information, only their core content needs to be retained. For example, referring to FIG. 2, the text information "cosmetics of brand A are very cost-effective" may be extracted as "cosmetics are cost-effective". For the image information, the above obtained image information may be that "the image is formed by splicing three images, image 1 shows a woman's hand holding perfume of brand A, image 2 shows a woman's hand holding skin lotion of brand A, and image 3 shows a woman's hand holding liquid foundation of brand A".

The final retained prompt information may be that "the image is formed by splicing three images, each of the three image shows a hand holding different cosmetics (which may be skin care products or perfume). A text description needs to be output and placed in the upper left corner of the image, indicating that these cosmetics are cost-effective. The overall background tone of the image needs to be warm, and there needs to be a contrast with the cosmetic images".

After the prompt information of the image is extracted in the above steps, it is necessary to generate a similar image (image to be predicted) based on the prompt information formed above.

At step 104, in some embodiments of the present disclosure, obtaining the image to be predicted through a diffusion process may include: obtaining a random noise image; and obtaining the image to be predicted by gradually transforming the random noise image into a coherent image based on the prompt information.

In the embodiments of the present disclosure, high-quality prompt information has been obtained based on the above understanding and insight into the image. Then, corresponding similar images may be generated using an image generation algorithm based on the originally obtained prompt information.

Specifically, the embodiments of the present disclosure may adopt a stable diffusion algorithm for image generation. The stable diffusion algorithm is a novel image generation technology designed to generate high-fidelity images in a controllable and stable manner. The algorithm is based on the idea of image denoising, and gradually transforms a random noise pattern into a coherent image structure through a diffusion process.

The core of the stable diffusion algorithm lies in its two main steps.

The first step is diffusion, that is, after inputting the original image, an effect of natural diffusion in a high-dimensional data space is simulated, and noise is continuously added to the original information to introduce randomness. The second step is reverse diffusion, that is, a deep learning model is utilized to guide the diffusion process toward a desired image input, ultimately generating the required image. In addition, for the denoising process, in addition to including the information of the original image added with noise, each denoising process also includes conditional information. This conditional information usually includes some text descriptions or some constraints.

In some embodiments of the present disclosure, obtaining the image to be predicted by gradually transforming the random noise image into the coherent image may include obtaining the image to be predicted by performing denoising on the random noise image using the prompt information as condition information of the random noise image.

In the embodiments of the present disclosure, the condition information may be the prompt information.

In some embodiments of the present disclosure, the trained diffusion model is obtained by training through the following methods: obtaining a historical base image by acquiring an image with a preset parameter higher than a preset threshold from a historical image; extracting historical prompt information according to the historical base image; obtaining a historical image to be predicted by inputting the historical prompt information into an untrained diffusion model; and obtaining the trained diffusion model by training the untrained diffusion model based on the historical image to be predicted and the historical base image.

In the embodiments of the present disclosure, since the training data of the standard stable diffusion model is often some general-purpose images, which does not match the scenario of the present disclosure, the image generated in the present disclosure need to be similar to the base image, and the resource allocation effect needs to be good. Thus, the present disclosure has specific requirements for the image, and the image generated by the standard stable diffusion model cannot be directly used.

In the embodiments of the present disclosure, there are many high-quality base images, all of which has good resource allocation effects. Thus, these high-quality base images may be used to retrain the stable diffusion model to improve the quality of the generated images. Certainly, during training, the model may be trained from scratch, or a pre-trained model may be retrained, which can effectively save time for training the model.

In the training process, when obtaining the prompt information of the high-quality base image, the above steps of generating the prompt information may be used for generation. Then, the image may be generated based on the prompt information, and the relevant loss may be then calculated.

Further, after the image is generated, since resources are limited, they need to be allocated to the highest-quality image. Therefore, this process does not end after the image is generated. A model may be set up to predict the resource allocation effect of the generated image, and the image with a better resource allocation effect may be selected as the final target image.

At step 106, in some embodiments of the present disclosure, obtaining the description feature of the image to be predicted and predicting the resource allocation effect of the image to be predicted based on the description feature may include: obtaining a description feature and a category feature of the image to be predicted; obtaining a historical resource allocation effect of the base image; obtaining prompt information corresponding to the image to be predicted, and obtaining a description feature of the prompt information; and predicting the resource allocation effect of the image to be predicted based on the description feature and the category feature of the image to be predicted, the historical resource allocation effect of the base image, and the description feature of the prompt information.

In some embodiments of the present disclosure, determining the target image based on the resource allocation effect of the image to be predicted may include determining the image to be predicted as the target image in response to the resource allocation effect of the image to be predicted being higher than a preset threshold.

In the embodiments of the present disclosure, since there are a large number of historical images, and there are image information and corresponding resource allocation effects, the model may be trained based on this historical information.

After the model training is completed, the resource allocation effect of the above obtained image to be predicted may be predicted. In the specific prediction process, the description feature and the category feature of the image to be predicted may be obtained first. The description feature refers to representing an object (which may be a word, a commodity, a movie, etc.) with a low-dimensional vector. The nature of this vector is that objects corresponding to vectors with close distances have similar meanings.

Subsequently, the description feature of the prompt information may also be obtained. Moreover, since the image to be predicted is the recreated image of the base image, the category of the image to be predicted may also be obtained. Certainly, the category of the base image is consistent with the category of the image to be predicted.

After that, dense features such as the size and resolution of the image to be predicted and the historical resource allocation effect of the base image may also be obtained.

Then, for the above obtained features, a multi-task structure may be adopted. The above obtained features may be input into a neural network feature computation. Finally, a branch may be used for each estimation target for estimation, and the bottom features of each sub-task are shared. This can effectively reduce the amount of computation and improve the computation speed through parameter sharing.

The above method for image generation includes: extracting prompt information from an obtained base image; inputting the prompt information into a trained diffusion model, and obtaining an image to be predicted through a diffusion process; obtaining a description feature of the image to be predicted, and predicting a resource allocation effect of the image to be predicted based on the description feature; and determining a target image based on the resource allocation effect of the image to be predicted. In the embodiments of the present disclosure, the prompt information is extracted from the base image, and historical high-quality images are interpreted comprehensively. Then, the prompt information is extracted from the interpreted information, and similar images (images to be predicted) of the base image are generated based on the prompt information. In addition, since a large number of similar images can be generated at one time based on the above method, in the present disclosure, the final qualified target image can be determined by predicting the resource allocation effect of the similar images. With the method for image generation in embodiments of the present disclosure, a large number of similar images can be quickly while effectively saving human resources. Moreover, the generated similar images can be selected by predicting the resource allocation effect in advance, so as to obtain the final similar images, thereby optimizing the effect of actual resource allocation of the similar images.

It should be noted that the method of the embodiments of the present disclosure may be executed by a single device, such as a computer or a server. The method of the present embodiment may also be applied to a distributed scenario and completed by multiple devices cooperating with each other. In the case of this distributed scenario, one device of the multiple devices may only execute one or more steps of the method of the embodiments of the present disclosure, and the multiple devices will interact with each other to complete the method.

It should be noted that some embodiments of the present disclosure have been described above. Other embodiments are within the scope of the appended claims. In some cases, the actions or steps recorded in the claims may be executed in an order different from that in the above embodiments and still achieve the desired results. In addition, the process depicted in the drawings does not necessarily require the specific order shown or the continuous order to achieve the desired results. In certain implementations, multitasking and parallel processing are also possible or may be advantageous.

Based on the same inventive concept, corresponding to the method of any of the above embodiments, the present disclosure further provides an apparatus for image generation, including: an extraction module 302 configured to extract prompt information from an obtained base image; a diffusion module 304 configured to input the prompt information into a trained diffusion model, and obtain an image to be predicted through a diffusion process; a prediction module 306 configured to obtain a description feature of the image to be predicted, and predict a resource allocation effect of the image to be predicted based on the description feature; and a determination module 308 configured to determine a target image based on the resource allocation effect of the image to be predicted.

In some embodiments of the present disclosure, the extraction module 302 includes: an extraction unit configured to extract base information from the obtained base image; a recognizing unit configured to obtain content information by recognizing image content of the base image; and an information extraction unit configured to obtain the prompt information by performing information extraction on the base information and the content information.

In some embodiments of the present disclosure, the base information includes at least one of an image size, a resolution, a hue, or a contrast of the base image.

In some embodiments of the present disclosure, the recognizing unit includes: obtaining text information by recognizing text content of the base image; obtaining text position information by obtaining position information of the text information; obtaining image information by recognizing the image content of the base image; obtaining layout information by recognizing image layout of the base image; and obtaining the content information based on the text information, the text position information, the image information, and the layout information.

In some embodiments of the present disclosure, the extraction unit includes obtaining the base information, the text position information, and the layout information; extracting core information of the text information and the image information; and obtaining the prompt information based on the base information, the text information, the layout information, and the core information.

In some embodiments of the present disclosure, the diffusion module 304 includes: a first obtaining unit configured to obtain a random noise image; and a transformation unit configured to obtain the image to be predicted by gradually transforming the random noise image into a coherent image based on the prompt information.

In some embodiments of the present disclosure, the transformation unit includes obtaining the image to be predicted by performing denoising on the random noise image using the prompt information as condition information of the random noise image.

In some embodiments of the present disclosure, the method further includes: a historical image obtaining module configured to obtain a historical base image by acquiring an image with a preset parameter higher than a preset threshold from a historical image; a historical prompt information extraction module configured to extract historical prompt information from the historical base image; an input module configured to obtain a historical image to be predicted by inputting the historical prompt information into an untrained diffusion model; and a training module configured to obtain the trained diffusion model by training the untrained diffusion model based on the historical image to be predicted and the historical base image.

In some embodiments of the present disclosure, the prediction module 306 includes: a second obtaining unit configured to obtain a description feature and a category feature of the image to be predicted; a third obtaining unit configured to obtain a historical resource allocation effect of the base image; a fourth obtaining unit configured to obtain prompt information corresponding to the image to be predicted, and obtain a description feature of the prompt information; and a prediction unit configured to predict the resource allocation effect of the image to be predicted based on the description feature and the category feature of the image to be predicted, the historical resource allocation effect of the base image, and the description feature of the prompt information.

In some embodiments of the present disclosure, the determination module 308 includes a determination unit configured to determine the image to be predicted as the target image in response to the resource allocation effect of the image to be predicted being higher than a preset threshold.

For the convenience of description, when describing the above apparatus, the functions are divided into various modules for separate description. Certainly, when implementing the present disclosure, the functions of each module may be implemented in the same or multiple software and/or hardware. The apparatus of the above embodiments is used to implement the corresponding method for image generation in any of the above embodiments, and has the beneficial effects of the corresponding method embodiments, which will not be repeated here.

Based on the same inventive concept, corresponding to the method of any of the above embodiments, the present disclosure further provides an electronic device, including a memory, a processor, and a computer program stored on the memory and executable on the processor, where the processor implements the method for image generation of any of the above embodiments when executing the program.

FIG. 4 illustrates a schematic diagram of a more specific electronic device hardware structure provided by the present embodiment, the device may include: a processor 1010, a memory 1020, an input/output interface 1030, a communication interface 1040, and a bus 1050. The processor 1010, the memory 1020, the input/output interface 1030, and the communication interface 1040 are connected to each other inside the device through the bus 1050.

The processor 1010 may be implemented using a general central processing unit (CPU), a microprocessor, an application specific integrated circuit (ASIC), or one or more integrated circuits, etc., for executing relevant programs to implement the technical solutions provided by the embodiments of the present specification.

The memory 1020 may be implemented in the form of read-only memory (ROM), random access memory (RAM), a static storage device, a dynamic storage device, etc. The memory 1020 may store an operating system and other applications, and when implementing the technical solutions provided by the embodiments of the present specification through software or firmware, the relevant program code is saved in the memory 1020 and called by the processor 1010 for execution.

The input/output interface 1030 is used to connect an input/output module to achieve information input and output. The input/output module may be configured as a component in the device (not shown in the figure), or may be external to the device to provide corresponding functions. The input device may include a keyboard, a mouse, a touch screen, a microphone, various sensors, etc., and the output device may include a display, a speaker, a vibrator, an indicator light, etc.

The communication interface 1040 is used to connect a communication module (not shown in the figure) to achieve communication interaction between the device and other devices. The communication module may communicate through a wired method (for example, USB, network cable, etc.) or a wireless method (for example, mobile network, WIFI, Bluetooth, etc.).

The bus 1050 includes a path for transferring information between various components of the device (for example, the processor 1010, the memory 1020, the input/output interface 1030, and the communication interface 1040).

It should be noted that although only the processor 1010, the memory 1020, the input/output interface 1030, the communication interface 1040, and the bus 1050 are shown in the device, during a specific implementation, the device may further include other components necessary for proper operation. In addition, it may be understood by those skilled in the art that the device may include only the components necessary to implement the solutions of the embodiments of the present specification, and not necessarily include all of the components shown in the figure.

The electronic device of the above embodiments is used to implement the corresponding method for image generation in any of the above embodiments, and has the beneficial effects of the corresponding method embodiments, which will not be repeated here.

Based on the same inventive concept, corresponding to the method of any of the above embodiments, the present disclosure further provides a non-transitory computer-readable storage medium, storing computer instructions, where the computer instructions are used to cause a computer to execute the method for image generation of any of the above embodiments.

The computer-readable medium in the present embodiment includes permanent and non-permanent, removable and non-removable media, and information storage may be implemented by using any method or technology. Information may be computer-readable instructions, data structures, program modules, or other data. Examples of the computer storage medium include, but are not limited to, a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storage, a cassette tape, tape or disk storage or other magnetic storage devices, or any other non-transmission medium that may be used to store information that may be accessed by a computing device.

The computer instructions stored on the storage medium of the above embodiments are used to cause the computer to execute the method for image generation of any of the above embodiments, and have the beneficial effects of the corresponding method embodiments, which will not be repeated here.

Based on the same inventive concept, corresponding to the method for image generation described in any of the above embodiments, the present disclosure further provides a computer program product, which includes computer program instructions. In some embodiments, the computer program instructions may be executed by one or more processors of a computer to cause the computer and/or the processor to execute the method for image generation. Corresponding to the execution body corresponding to each step in each embodiment of the method for image generation, the processor executing the corresponding step may belong to the corresponding execution body.

The computer program product of the above embodiments is used to cause the computer and/or the processor to execute the method for image generation of any of the above embodiments, and has the beneficial effects of the corresponding method embodiments, which will not be repeated here.

Ordinary technicians in the field should understand that the discussion of any of the above embodiments is only illustrative, and is not intended to imply that the scope of the present disclosure (including the claims) is limited to these examples; in the concept of the present disclosure, the technical features in the above embodiments or different embodiments may also be combined, steps may be implemented in any order, and there are many other changes in different aspects of the embodiments of the present disclosure as described above, which are not provided in detail for the sake of simplicity.

In addition, to simplify description and discussion and avoid obscuring the embodiments of the present disclosure, known power/ground connections to an integrated circuit (IC) chip and other components may or may not be shown in the drawings provided. In addition, the apparatus may be shown in the form of a block diagram to avoid obscuring the embodiments of the present disclosure, and the following fact is also taken into account: details about the implementation of the apparatus in the block diagram are highly dependent on the platform on which the embodiments of the present disclosure are to be implemented (that is, these details should be fully understood by those skilled in the art). In the case where specific details (for example, circuits) are set forth to describe the example embodiments of the present disclosure, it is obvious to those skilled in the art that the embodiments of the present disclosure may be implemented without these specific details or with changes to these specific details. Therefore, these descriptions should be considered as illustrative rather than restrictive.

Although the present disclosure has been described in connection with the specific embodiments of the present disclosure, many substitutions, modifications, and variations of these embodiments will be apparent to those of ordinary skill in the art from the foregoing description. For example, other memory architectures (e.g., dynamic RAM (DRAM)) may use the discussed embodiments.

The embodiments of the present disclosure are intended to cover all such substitutions, modifications, and variations that fall within the broad scope of the appended claims. Therefore, any omissions, modifications, equivalent substitutions, improvements, etc. made within the spirit and principles of the embodiments of the present disclosure should be included in the protection scope of the present disclosure.

## Claims

1. A method for image generation, comprising:
extracting prompt information from an obtained base image;
inputting the prompt information into a trained diffusion model, and obtaining an image to be predicted through a diffusion process;
obtaining a description feature of the image to be predicted, and predicting a resource allocation effect of the image to be predicted based on the description feature; and
determining a target image based on the resource allocation effect of the image to be predicted.

2. The method of claim 1, wherein the extracting prompt information from an obtained base image comprises:
extracting base information from the obtained base image;
obtaining content information by recognizing image content of the base image; and
obtaining the prompt information by performing information extraction on the base information and the content information.

3. The method of claim 2, wherein the base information comprises at least one of an image size, a resolution, a hue, or a contrast of the base image.

4. The method of claim 2, wherein the recognizing image content of the base image to obtain content information comprises:
obtaining text information by recognizing text content of the base image;
obtaining text position information by obtaining position information of the text information;
obtaining image information by recognizing the image content of the base image;
obtaining layout information by recognizing image layout of the base image; and
obtaining the content information based on the text information, the text position information, the image information, and the layout information.

5. The method of claim 4, wherein the obtaining the prompt information by performing information extraction on the base information and the content information comprises:
obtaining the base information, the text position information, and the layout information;
extracting core information of the text information and the image information; and
obtaining the prompt information based on the base information, the text information, the layout information, and the core information.

6. The method of claim 1, wherein the obtaining an image to be predicted through a diffusion process comprises:
obtaining a random noise image; and
obtaining the image to be predicted by gradually transforming the random noise image into a coherent image based on the prompt information.

7. The method of claim 6, wherein the obtaining the image to be predicted by gradually transforming the random noise image into a coherent image based on the prompt information comprises:
obtaining the image to be predicted by performing denoising on the random noise image using the prompt information as condition information of the random noise image.

8. The method of claim 1, wherein the trained diffusion model is obtained by training through:
obtaining a historical base image by acquiring an image with a preset parameter higher than a preset threshold from a historical image;
extracting historical prompt information from the historical base image;
obtaining a historical image to be predicted by inputting the historical prompt information into an untrained diffusion model; and
obtaining the trained diffusion model by training the untrained diffusion model based on the historical image to be predicted and the historical base image.

9. The method of claim 1, wherein the obtaining a description feature of the image to be predicted and predicting a resource allocation effect of the image to be predicted based on the description feature comprises:
obtaining a description feature and a category feature of the image to be predicted;
obtaining a historical resource allocation effect of the base image;
obtaining prompt information corresponding to the image to be predicted, and obtaining a description feature of the prompt information; and
predicting the resource allocation effect of the image to be predicted based on the description feature and the category feature of the image to be predicted, the historical resource allocation effect of the base image, and the description feature of the prompt information.

10. The method of claim 1, wherein the determining a target image based on the resource allocation effect of the image to be predicted comprises:
determining the image to be predicted as the target image in response to the resource allocation effect of the image to be predicted being higher than a preset threshold.

11. An apparatus for image generation, comprising:
an extraction module configured to extract prompt information from an obtained base image;
a diffusion module configured to input the prompt information into a trained diffusion model, and obtain an image to be predicted through a diffusion process;
a prediction module configured to obtain a description feature of the image to be predicted, and predict a resource allocation effect of the image to be predicted based on the description feature; and
a determination module configured to determine a target image based on the resource allocation effect of the image to be predicted.

12. The apparatus of claim 11, wherein the extraction module comprises:
an extraction unit configured to extract base information from the obtained base image;
a recognizing unit configured to obtain content information by recognizing image content of the base image; and
an information extraction unit configured to obtain the prompt information by performing information extraction on the base information and the content information.

13. The apparatus of claim 12, wherein the base information comprises at least one of an image size, a resolution, a hue, or a contrast of the base image.

14. The apparatus of claim 12, wherein the recognizing unit comprises:
obtaining text information by recognizing text content of the base image;
obtaining text position information by obtaining position information of the text information;
obtaining image information by recognizing the image content of the base image;
obtaining layout information by recognizing image layout of the base image; and
obtaining the content information based on the text information, the text position information, the image information, and the layout information.

15. The apparatus of claim 14, wherein the extraction unit comprises:
obtaining the base information, the text position information, and the layout information;
extracting core information of the text information and the image information; and
obtaining the prompt information based on the base information, the text information, the layout information, and the core information.

16. The apparatus of claim 11, wherein the diffusion module comprises:
a first obtaining unit configured to obtain a random noise image; and
a transformation unit configured to obtain the image to be predicted by gradually transforming the random noise image into a coherent image based on the prompt information.

17. The apparatus of claim 16, wherein the transformation unit comprises:
obtaining the image to be predicted by performing denoising on the random noise image using the prompt information as condition information of the random noise image.

18. The apparatus of claim 11, further comprising:
a historical image obtaining module configured to obtain a historical base image by acquiring an image with a preset parameter higher than a preset threshold from a historical image;
a historical prompt information extraction module configured to extract historical prompt information from to the historical base image;
an input module configured to obtain a historical image to be predicted by inputting the historical prompt information into an untrained diffusion model; and
a training module configured to obtain the trained diffusion model by training the untrained diffusion model based on the historical image to be predicted and the historical base image.

19. The apparatus of claim 11, wherein the prediction module comprises:
a second obtaining unit configured to obtain a description feature and a category feature of the image to be predicted;
a third obtaining unit configured to obtain a historical resource allocation effect of the base image;
a fourth obtaining unit configured to obtain prompt information corresponding to the image to be predicted, and obtain a description feature of the prompt information; and
a prediction unit configured to predict the resource allocation effect of the image to be predicted based on the description feature and the category feature of the image to be predicted, the historical resource allocation effect of the base image, and the description feature of the prompt information.

20. The apparatus of claim 11, wherein the determination module comprises:
a determination unit configured to determine the image to be predicted as the target image in response to the resource allocation effect of the image to be predicted being higher than a preset threshold.

21. An electronic device, comprising a memory, a processor, and a computer program stored on the memory and executable on the processor, the program, when executed by the processor, causing the method of any of claims 1 to 10 to be performed.

22. A non-transitory computer-readable storage medium storing computer instructions, the computer instructions are configured to cause a computer to perform the method of any of claims 1 to 10.

23. A computer program product, comprising computer program instructions that, when running on a computer, cause the computer to perform the method of any of claims 1 to 10.
